# EUROPÄISCHE PATENTSCHRIFT

(11) **EP 3 438 511 B1**
(45) Veröffentlichungstag und Bekanntmachung des Hinweises auf die Patenterteilung: **12.02.2020**
(21) Anmeldenummer: 18183099.3
(22) Anmeldetag: 12.07.2018
(51) Int. Cl.: F16J 15/00, B60T 10/02, F16J 15/34, B60T 1/087, F16D 57/00, F16D 57/04, F16D 125/08

(54) **GLEITRINGDICHTUNGSANORDNUNG EINES HYDRODYNAMISCHEN RETARDERS SOWIE HYDRODYNAMISCHER RETARDER**
SLIDE RING SEAL ARRANGEMENT OF A HYDRODYNAMIC RETARDER, AND HYDRODYNAMIC RETARDER
BAGUE D'ÉTANCHÉITÉ GLISSANTE D'UN RETARDATEUR HYDRODYNAMIQUE AINSI QUE RETARDATEUR HYDRODYNAMIQUE

(30) Priorität: 31.07.2017 DE 102017213148
(43) Veröffentlichungstag der Anmeldung: 06.02.2019
(73) Patentinhaber: Carl Freudenberg KG, 69469 Weinheim (DE); EagleBurgmann Germany GmbH & Co. KG, 82515 Wolfratshausen (DE)
(72) Erfinder: SIMON, Clemens, 82362 Weilheim (DE); BRAUN, Uwe, 69469 Lützelsachsen (DE); LANG, Dr. Klaus, 82547 Eurasburg (DE)
(74) Vertreter: Hoefer & Partner Patentanwälte mbB

(56) Entgegenhaltungen:
- EP-A1- 1 455 123
- WO-A1-2011/082759
- US-A- 4 900 039
- US-A1- 2017 051 857

## Beschreibung

Die Erfindung betrifft eine Gleitringdichtungsanordnung eines hydrodynamischen Retarders sowie einen hydrodynamischen Retarder mit einer Gleitringdichtungsanordnung.

Hydrodynamische Retarder werden bei Antrieben von Fahrzeugen, insbesondere bei Lastkraftwagen oder Omnibussen oder dgl. verwendet. Der Retarder wird hierbei durch Befüllen und Entleeren eines Retarder-Arbeitsraums, in welchem ein Statorrad und ein mit einer Retarderwelle verbundenes Rotorrad angeordnet sind, ein- oder ausgeschaltet. Das Arbeitsmedium ist eine Flüssigkeit, üblicherweise Öl oder Wasser. Der Retarder wird in Fahrzeugen üblicherweise zum Bremsen eingesetzt. Zur Abdichtung des Retarders gegenüber der Umwelt wird beispielsweise eine Gleitringdichtung verwendet. Hierbei ergibt sich das Problem, dass bei einem Nichtbetrieb des Retarders, d.h., wenn keine Flüssigkeit im Retarderraum vorhanden ist und das Fahrzeug beispielsweise über einen längeren Zeitraum nicht bremst, dass an der Gleitringdichtung nicht ausreichend Schmiermedium, welches durch die Retarder-Flüssigkeit bereitgestellt wird, vorhanden ist. Hierdurch kann es zu einem sog. Trockenlauf der Gleitringdichtung kommen, was eine übermäßige Wärmeerzeugung an der Gleitringdichtung nach sich zieht und im Extremfall zu einer Beschädigung bzw. einem Ausfall der Gleitringdichtung führen kann.

WO 2011/082759 A1 offenbart eine Gleitringdichtungsanordnung gemäß dem Oberbegriff des Anspruchs 1.

Es ist daher Aufgabe der vorliegenden Erfindung, eine Gleitringdichtungsanordnung eines hydrodynamischen Retarders bereitzustellen, welche bei einfachem Aufbau und einfacher, kostengünstiger Herstellbarkeit eine längere Lebensdauer und reduzierte Gefahr eines Ausfalls der Gleitringdichtung aufweist. Ferner ist es Aufgabe der vorliegenden Erfindung, einen hydrodynamischen Fahrzeug-Retarder bereitzustellen, welcher eine verbesserte und langlebige Abdichtung an der Retarderwelle aufweist.

Diese Aufgabe wird durch eine Gleitringdichtungsanordnung mit den Merkmalen des Anspruchs 1 sowie einen hydrodynamischen Retarder mit den Merkmalen des Anspruchs 12 gelöst. Die Unteransprüche zeigen jeweils bevorzugte Ausführungsformen der Erfindung.

Die erfindungsgemäße Gleitringdichtungsanordnung mit den Merkmalen des Anspruchs 1 weist demgegenüber den Vorteil auf, dass eine ausreichende Schmierung der Gleitringdichtungsanordnung sichergestellt ist. Somit kann auch bei einem längeren Nicht-Betrieb des Retarders, beispielsweise bei einer längeren Autobahnfahrt eines Fahrzeugs ohne Bremsvorgänge eine ausreichende Schmierung und Kühlung der Gleitringdichtungsanordnung sofort ermöglicht werden. Hierdurch erweist die Gleitringdichtungsanordnung eine signifikant höhere Lebensdauer auf, als bisher im Stand der Technik. Dies wird dadurch erreicht, dass sichergestellt ist, dass eine ausreichende Menge eines flüssigen Kühlmediums und/oder Schmiermediums nahe einem Dichtspalt der Gleitringdichtungsanordnung vorhanden ist. Nachfolgend wird einheitlich der Begriff "Kühlmedium" verwendet, wobei unter diesem Begriff "Kühlmedium" ein Medium verstanden wird, welches sowohl kühlende Eigenschaften als auch schmierende Eigenschaften aufweist. Somit übernimmt das Kühlmedium sowohl eine Kühlung der Gleitringdichtungsanordnung als auch eine notwendige Schmierung im Bereich von Gleitflächen der Gleitringdichtungsanordnung. Das Kühlmedium ist vorzugsweise ein Öl. Gemäß der Erfindung ist ein Kühlmediumraum vorgesehen, welcher in jedem Betriebszustand des Retarders mit Kühlmedium gefüllt ist, um so einen Dichtspalt der Gleitringdichtungsanordnung mit Kühlmedium zu versorgen. Dabei umfasst die erfindungsgemäße Gleitringdichtungsanordnung eines Retarders eine erste Gleitringdichtung mit einem rotierenden Gleitring und einem stationären Gleitring, welche zwischen sich einen Dichtspalt definieren. Ferner umfasst die Gleitringdichtungsanordnung eine Zusatzdichtung, d.h., eine zweite Dichtung, sowie den Kühlmediumraum, welcher mit Kühlmedium gefüllt ist und welcher an den Dichtspalt der ersten Gleitringdichtung reicht. Die erste Gleitringdichtung dichtet dabei den Kühlmediumraum gegenüber einem Umgebungsbereich ab. Ferner ist ein Kühlmediumzugang und ein Kühlmediumausgang in und aus dem Kühlmediumraum vorgesehen. Der Kühlmediumzugang ist zum Zuführen von Kühlmedium vorgesehen und ist für eine Verbindung des Kühlmediumraums mit einem Retarder-Arbeitsraum eingerichtet. Der Kühlmediumausgang ist zum Abführen von Kühlmedium aus dem Kühlmediumraum vorgesehen. Die Zusatzdichtung ist dabei im Kühlmediumzugang angeordnet und dichtet den Kühlmediumraum gegenüber z.B. dem Retarder-Arbeitsraum ab. Dabei ist die Zusatzdichtung derart eingerichtet, dass bei einem Druckanstieg im Kühlmediumzugang, d.h., z.B. einem Druckanstieg im Retarder-Arbeitsraum, über einen ersten Druck P1 im Kühlmediumraum ein Öffnen der Zusatzdichtung erfolgt, so dass Kühlmedium aus dem Retarder-Arbeitsraum über den Kühlmediumzugang in den Kühlmediumraum zugeführt wird. Die Zusatzdichtung ist ferner derart eingerichtet, dass bei einem Druck im Kühlmediumzugang, welcher kleiner als der erste Druck P1 im Kühlmediumraum ist, die Zusatzdichtung schließt und somit den Kühlmediumraum von dem Kühlmediumzugang trennt.

Somit kann durch das Vorsehen des in jedem Betriebszustand mit Kühlmedium gefüllten Kühlmediumraums benachbart zum Dichtspalt der ersten Gleitringdichtung sichergestellt werden, dass eine ausreichende Schmierung des Dichtspalts mit Kühlmedium möglich ist, so dass eine Lebensdauer der Gleitringdichtungsanordnung, z.B. eines Retarders, signifikant verlängert werden kann. Weiterhin kann durch den Austausch des Kühlmediums im Kühlmediumraum bei einem Betrieb des Retarders, d.h., wenn der Druck im Retarder-Arbeitsraum größer ist als der Druck im Kühlmediumraum, ein Austausch des Kühlmediums im Kühlmediumraum erfolgen, so dass auch eine ausreichende Wärmeabfuhr von der Gleitringdichtungsanordnung möglich ist.

Vorzugsweise ist im Kühlmediumausgang ein Schließelement angeordnet, um den Kühlmediumausgang freizugeben und zu verschließen. Hierdurch kann sichergestellt werden, dass eine ausreichende Menge an Kühlmedium im Kühlmediumraum verbleibt.

Das Schließelement ist besonders bevorzugt ein druckgesteuertes Rückschlagventil. Hierdurch kann ein automatisches Öffnen des Rückschlagventils ermöglicht werden, sobald ein erster Druck P1 im Kühlmediumraum über einen vorbestimmten definierten Druck, welcher zum Öffnen des Rückschlagventils notwendig ist, ansteigt. Derartige Rückschlagventile sind sehr kostengünstig und können ein verlässliches Freigeben und Verschließen des Kühlmediumausgangs sicherstellen.

Eine besonders kostengünstige und einfache Gleitringdichtungsanordnung kann bereitgestellt werden, wenn die Zusatzdichtung bevorzugt eine Lippendichtung ist. Die Lippendichtung ist vorzugsweise aus einem elastischen Material hergestellt, bevorzugt einem Elastomer, und kann kostengünstig bereitgestellt werden und ist sehr betriebssicher. Die Lippendichtung übernimmt dabei neben der Abdichtfunktion auch noch eine Ventilfunktion, indem die Lippendichtung bei Ansteigen eines Drucks außerhalb des Kühlmediumraums von der Dichtfläche, an welcher eine Dichtlippe der Lippendichtung anliegt, abhebt und somit eine Verbindung zum Kühlmediumraum herstellt. Die Lippendichtung weist bevorzugt genau eine Dichtlippe auf, mit welcher die Lippendichtung an der Dichtfläche anliegt und abdichtet. Das Öffnen der Lippendichtung erfolgt dann durch elastische Verformung der Lippendichtung, wodurch ein Abheben von der Dichtfläche erreicht wird.

Besonders bevorzugt dichtet die Lippendichtung an einem äußeren Umfangsbereich des rotierenden Gleitrings ab. Hierdurch kann ein besonders kompakter und platzsparender Aufbau erreicht werden.

Gemäß einer anderen bevorzugten Ausgestaltung der vorliegenden Erfindung ist die Zusatzdichtung eine zweite Gleitringdichtung. Die zweite Gleitringdichtung weist einen axial verschiebbaren Gleitring auf. Hierdurch kann der Dichtspalt durch Axialbewegung des axial verschiebbaren Gleitrings vergrößert werden, so dass ein Öffnen der zweiten Gleitringdichtung ermöglicht wird. Besonders bevorzugt ist der axial verschiebbare Gleitring der stationäre Gleitring der zweiten Gleitringdichtung.

Ein besonders kompakter und einfacher Aufbau ist möglich, wenn der erste rotierende Gleitring der ersten Gleitringdichtung und der zweite rotierende Gleitring der zweiten Gleitringdichtung in einem einzigen gemeinsamen Bauteil integriert sind. Dieses gemeinsame Bauteil weist dann eine erste Gleitfläche für die erste Gleitringdichtung und eine zweite Gleitfläche für die zweite Gleitringdichtung auf. Zwischen den beiden Gleitflächen ist vorzugsweise eine Ausnehmung, z.B. eine Nut, oder dgl. zur Trennung der beiden Gleitflächen vorgesehen.

Besonders bevorzugt sind die beiden Gleitflächen der ersten und zweiten Gleitringdichtung an dem gemeinsamen Bauteil an einer gleichen Seite des gemeinsamen Bauteils angeordnet.

Weiter bevorzugt weist der axial verschiebbare Gleitring der zweiten Gleitringdichtung eine zum Kühlmediumzugang gerichtete und gleichzeitig auch in Axialrichtung gerichtete Dichtfläche auf, derart, dass bei einem höheren Druck außerhalb des Kühlmediumraums als im Kühlmediumraum selbst eine axiale Verschiebung des axial verschiebbaren Gleitrings auftritt. Somit kann automatisch durch eine Fläche am axial verschiebbaren Gleitring einen Öffnen der zweiten Gleitringdichtung ermöglicht werden. Diese Fläche kann dabei senkrecht zu einer Axialrichtung der Gleitringdichtung ausgerichtet sein oder auch in einem spitzen Winkel zur Axialrichtung ausgerichtet sein. Die Öffnungscharakteristik der zweiten Gleitringdichtung kann dabei durch Wahl einer Größe der Steuerfläche am axial verschiebbaren Gleitring bestimmt werden. Besonders bevorzugt wird die Steuerfläche durch einen Absatz am axial verschiebbaren Gleitring bereitgestellt werden.

Weiter bevorzugt ist der Kühlmediumraum in einem im Schnitt C-förmigen Gehäusebauteil angeordnet. Hierdurch wird es möglich, dass die Gleitringdichtungsanordnung als vormontierte Baugruppe bereitstellbar ist und somit beispielsweise als Zulieferteil geliefert werden kann, beispielsweise für einen Einbau in einem Retarder.

Weiter bevorzugt sind die erste Gleitringdichtung und die zweite Gleitringdichtung der Gleitringdichtungsanordnung in Reihe in Axialrichtung als sog. Tandem-Dichtung angeordnet.

Ferner betrifft die vorliegende Erfindung einen hydrodynamischen Retarder, umfassend eine Retarder-Welle, ein Statorrad, ein Rotorrad, ein Retarder-Gehäuse und eine erfindungsgemäße Gleitringdichtungsanordnung. Vorzugsweise ist die Gleitringdichtungsanordnung in Axialrichtung unmittelbar benachbart zum hydrodynamischen Retarder angeordnet und dichtet direkt an der Retarder-Welle ab.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht eines hydrodynamischen Retarders mit einer Gleitringdichtungsanordnung gemäß einem ersten Ausführungsbeispiel der Erfindung, wobei der Retarder sich nicht im Betrieb befindet;
- Fig. 2: eine schematische Schnittansicht der Gleitringdichtungsanordnung des Retarders von Fig. 1, wobei sich der Retarder im Betrieb befindet;
- Fig. 3: eine schematische Schnittansicht einer Gleitringdichtungsanordnung eines hydrodynamischen Retarders gemäß einem zweiten Ausführungsbeispiel der Erfindung, wobei sich der Retarder nicht im Betrieb befindet; und
- Fig. 4: eine schematische Schnittansicht der Gleitringdichtungsanordnung von Fig. 3, wobei sich der Retarder im Betrieb befindet.

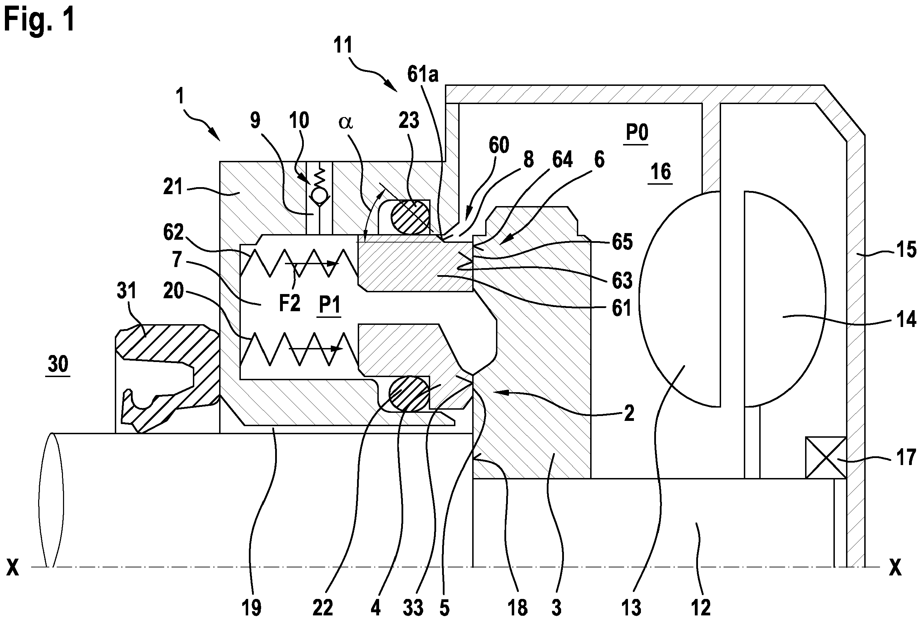

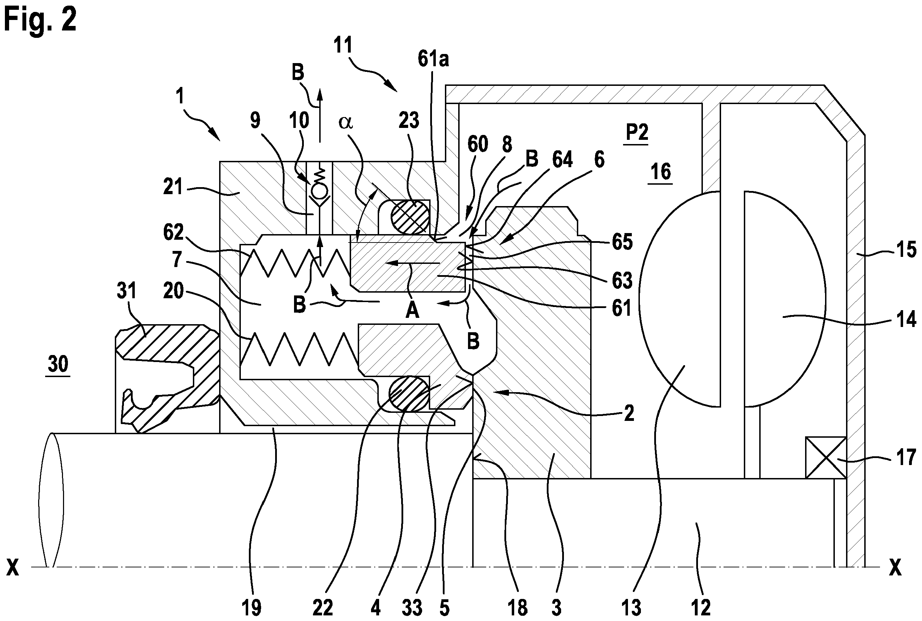

Nachfolgend wird unter Bezugnahme auf die Fig. 1 und 2 eine Gleitringdichtungsanordnung 1 sowie ein hydrodynamischer Retarder 11 gemäß einem ersten bevorzugten Ausführungsbeispiel der Erfindung im Detail beschrieben.

Fig. 1 zeigt eine Schnittansicht eines Retarders 11, welcher eine Retarder-Welle 12, ein Statorrad 13, ein Rotorrad 14 und ein Retarder-Gehäuse 15 umfasst. Das Retarder-Gehäuse 15 schließt einen Retarder-Arbeitsraum 16 ein. Das Statorrad 13 ist dabei am Retarder-Gehäuse 15 befestigt. Das Rotorrad 14 ist mit der Retarder-Welle 12 verbunden. Das Bezugszeichen 17 bezeichnet ein Lager (fliegende Lagerung), an welchem die Retarder-Welle 12 gelagert ist.

Der hydrodynamische Retarder wird beispielsweise bei Fahrzeugen, insbesondere Lastkraftwagen oder Omnibussen oder dgl. verwendet. Hierbei wird durch Füllen des Retarder-Arbeitsraums 16 mit einer Flüssigkeit, beispielsweise Öl, Bremsarbeit durch den Retarder, d.h., Umwandlung in Wärme, verrichtet. Nach einem erfolgten Bremsvorgang wird dann die Flüssigkeit wieder aus dem Retarder-Arbeitsraum 16 abgelassen.

An der Retarder-Welle 12 dichtet nun eine erfindungsgemäße Gleitringdichtungsanordnung 1 ab. Hierbei weist die Retarder-Welle 12 einen Wellenabsatz 18 auf, an welchem die Gleitringdichtungsanordnung 1 angeordnet ist.

Die Gleitringdichtungsanordnung 1 umfasst eine erste Gleitringdichtung 2 mit einem ersten rotierenden Gleitring 3 (Gegenring) und einem ersten stationären Gleitring 4, welche zwischen sich einen Dichtspalt 5 definieren. Die Gleitringdichtungsanordnung 1 dichtet dabei den Retarder-Arbeitsraum 16 gegenüber einer Umgebung 30 ab.

Die Gleitringdichtungsanordnung 1 umfasst ferner eine Zusatzdichtung 6, welche in diesem Ausführungsbeispiel als zweite Gleitringdichtung 60 ausgebildet ist. Die zweite Gleitringdichtung 60 umfasst einen zweiten stationären Gleitring 61, wobei der rotierende Gleitring 3 der ersten Gleitringdichtung 2 auch eine Gleitfläche 63 des zweiten rotierenden Gleitrings für die zweite Gleitringdichtung 60 bereitstellt. Wie aus Fig. 1 ersichtlich ist, sind die rotierenden Gleitringe der ersten zweiten Gleitringdichtung 2, 60 in einem gemeinsamen Bauteil (mit Bezugszeichen 3 bezeichnet) integriert. Somit weist der rotierende Gleitring 3 zwei Gleitflächen auf, nämlich eine erste Gleitfläche 33 für die erste Gleitringdichtung 2 und eine zweite Gleitfläche 63 für die zweite Gleitringdichtung 60.

Weiterhin umfasst die erste Gleitringdichtungsanordnung 1 einen Kühlmediumraum 7. Der Kühlmediumraum 7 ist vorgesehen, um ständig, d.h. in jedem Betriebszustand des Retarders, ein Kühlmedium, welches auch als Schmiermedium genutzt wird, an der ersten Gleitringdichtung 2 bereitzustellen. Dies hat den Vorteil, dass sichergestellt werden kann, dass immer ein Kühlmedium an der ersten und zweiten Gleitringdichtung 2, 60 vorhanden ist, um die Gleitringdichtungen zu schmieren und zu kühlen.

Der Kühlmediumraum 7 ist innerhalb eines Gehäuses 21 der ersten Gleitringdichtung 2 angeordnet. Das Gehäuse 21 weist einen im Wesentlichen C-förmigen Querschnitt auf, in dessen Inneren der Kühlmediumraum 7 gebildet ist. Der Kühlmediumraum 7 ist über einen Kühlmediumzugang 8 mit einem Zuführbereich für frisches Kühlmedium, in diesem Ausführungsbeispiel direkt aus dem Retarder-Arbeitsraum 16, und mit einem Kühlmediumausgang 9 versehen.

Wie aus Fig. 1 ersichtlich ist, ist der Kühlmediumausgang 9 unmittelbar im Gehäuse 21 angeordnet. Im Kühlmediumausgang 9 ist dabei ein Schließelement 10 in Form eines selbsttätig öffnenden Rückschlagventils angeordnet. Das Rückschlagventil öffnet, sobald ein erster Druck P1 im Kühlmediumraum 7 größer ist als in einem Bereich in Strömungsrichtung (Pfeil B) nach dem Rückschlagventil (vgl. Fig. 2).

Die erste Gleitringdichtung 2 weist ferner ein erstes Vorspannelement 20 auf, welches eine Vorspannung in Axialrichtung X-X auf den ersten stationären Gleitring 4 ausübt, insbesondere in Höhe von ca. 100 N. Weiterhin ist am ersten stationären Gleitring 4 ein O-Ring 22 zur Abdichtung am Gehäuse 21 der Gleitringdichtungsanordnung vorgesehen.

Ein zweites Vorspannelement 62 ist an der zweiten Gleitringdichtung 60 am zweiten stationären Gleitring 61 angeordnet, um eine Vorspannung des stationären zweiten Gleitrings 61 der zweiten Gleitringdichtung in Axialrichtung X-X bereitzustellen.

Die zweite Gleitringdichtung 60 wird somit in diesem Ausführungsbeispiel durch einen Teilbereich des rotierenden Gleitrings 3, der die erste Gleitfläche 33 für die erste Gleitringdichtung 2 umfasst und die zweite Gleitfläche 63 für die zweite Gleitringdichtung 60 umfasst, bereitgestellt. Weiterhin weist die zweite Gleitringdichtung 60 am zweiten stationären Gleitring 61 eine Gleitfläche 64 auf, so dass der Dichtspalt 65 zwischen der Gleitfläche 64 und der Gleitfläche 63 der zweiten Gleitringdichtung 60 gebildet ist.

Wie weiter aus Fig. 1 ersichtlich ist, ist am stationären Gleitring 61 eine Steuerfläche 61a vorgesehen. Die Steuerfläche 61a ist durch einen Absatz am stationären Gleitring 61 gebildet. Die Steuerfläche 61a ist dabei in Richtung zum Kühlmediumzugang 8 gerichtet und dadurch in Verbindung mit dem Retarder-Arbeitsraum 16. Die Steuerfläche 61a ist in einem spitzen Winkel α zum Dichtspalt 65 der zweiten Gleitringdichtung 60 angeordnet, vorzugsweise in einem Winkel von 45°. Hierdurch wird erreicht, dass ein Druck im Kühlmediumzugang 8 eine Teil-Axialkraft auf den stationären Gleitring 61 über die schräge Steuerfläche 61a ausüben kann.

Der stationäre Gleitring 61 der zweiten Gleitringdichtung 60 ist mittels eines O-Rings 23 gegenüber dem Gehäuse 21 der Gleitringdichtungsanordnung 1 abgedichtet.

Weiterhin ist eine Umgebungsdichtung 31 in Form einer Elastomerdichtung vorgesehen, welche am Gehäuse 21 der Gleitringdichtungsanordnung 1 angeordnet ist und eine Abdichtung eines Spalts zwischen dem Gehäuse 21 und der Retarder-Welle 12 gegenüber der Umgebung 30 ermöglichen.

Die Funktion der erfindungsgemäßen Gleitringdichtung 1 des ersten Ausführungsbeispiel ist dabei wie folgt. Wenn in einem Betriebsfall, d.h., wenn der Retarder 11 aktiv ist, Flüssigkeit in den Retarder-Arbeitsraum 16 zugeführt wird und der Retarder Bremsarbeit verrichtet, steigt ein Druck im Retarder-Arbeitsraum 16 vom Druck P0 in Fig. 1 auf den Druck P2 in Fig. 2. Hierbei ist der Druck P0 im Retarder-Arbeitsraum 16 in dem Fall, in welchem der Retarder nicht arbeitet, kleiner als ein erster Druck P1 im Kühlmediumraum 7. Wenn nun der Druck im Retarder-Arbeitsraum 16 über den ersten Druck P1 ansteigt, kann eine axiale Bewegung des stationären Gleitrings 61 der zweiten Gleitringdichtung 60 ermöglicht werden. Hierbei übt der ansteigende Druck P2 (vgl. Fig. 2) im Retarder-Arbeitsraum 16 eine in Axialrichtung wirkende Kraft A auf die Steuerfläche 61a am stationären Gleitring 61 aus, so dass der stationäre Gleitring 61 gegen die Vorspannkraft des zweiten Vorspannelements 62 in Axialrichtung X-X bewegt wird. Dadurch wird der Dichtspalt 65 der zweiten Gleitringdichtung 60 vergrößert, so dass Medium, wie in Fig. 2 durch die Pfeile B angedeutet, aus dem Retarder-Arbeitsraum 16 in den Kühlmediumraum 7 strömen kann. Dadurch steigt auch ein Druck im Kühlmediumraum 7, so dass ab einem bestimmten Druckniveau das Schließelement 10 in Form des Rückschlagventils im Kühlmediumausgang 9 öffnet, so dass Kühlmedium vom Retarder-Arbeitsraum 16 durch den Kühlmediumraum 7 zurück zu einem Kühlmediumspeicher geführt wird. Hierdurch wird auch eine Kühlung der ersten Gleitringdichtung 1 ermöglicht.

Wenn der Retarder 11 nicht mehr arbeiten soll, wird die Flüssigkeit aus dem Retarder-Arbeitsraum 16 abgelassen, so dass der Druck im Retarder-Arbeitsraum 16 wieder auf den Druck P0 absinkt und dieser entleert wird. Dann stellt das zweite Vorspannelement 62, wie in Fig. 1 durch den Pfeil F2 angedeutet, den stationären Gleitring 61 wieder in die Ausgangsstellung zurück. Da der Druck im Kühlmediumraum 7 sinkt, schließt auch das Schließelement 7 durch eine Federbelastung selbsttätig.

Somit ist sichergestellt, dass auch bei einem Nicht-Betrieb des Retarders 11 immer ausreichend Kühlmedium im Kühlmediumraum 7 vorhanden ist, welcher durch das Schließelement 10 und die zweite Gleitringdichtung 60 und die erste Gleitringdichtung 2 abgeschlossen ist. Somit kann insbesondere ein Trockenfallen der ersten Gleitringdichtung 2 verhindert werden, wodurch die Gleitringdichtungsanordnung 1 eine signifikant längere Lebensdauer aufweisen kann. Dabei übernimmt die zweite Gleitringdichtung 60 neben der Abdichtfunktion zur Abdichtung des Kühlmediumraums 7 auch eine Ventilfunktion, um den Dichtspalt 65 der zweiten Gleitringdichtung 60 so zu erweitern, dass im Retarder-Betrieb eine ausreichende Menge an Kühlmedium in den Kühlmediumraum 7 strömen kann. Insbesondere bei Verwendung an einem Retarder kann somit die erfindungsgemäße Gleitringdichtungsanordnung 1 beim Anfahren bzw. Abfahren des Retarders eine sichere Abdichtung ohne separate Kühlmediumzufuhr sicherstellen.

Es sei angemerkt, dass durch Einstellung einer Vorspannkraft des zweiten Vorspannelements 62 bzw. einer Wahl einer Größe der Steuerfläche 61a am stationären Gleitring 61 der zweiten Gleitringdichtung 60 die Öffnungscharakteristik der zweiten Gleitringdichtung bei Änderung im Retarder-Arbeitsraum 16 eingestellt werden kann.

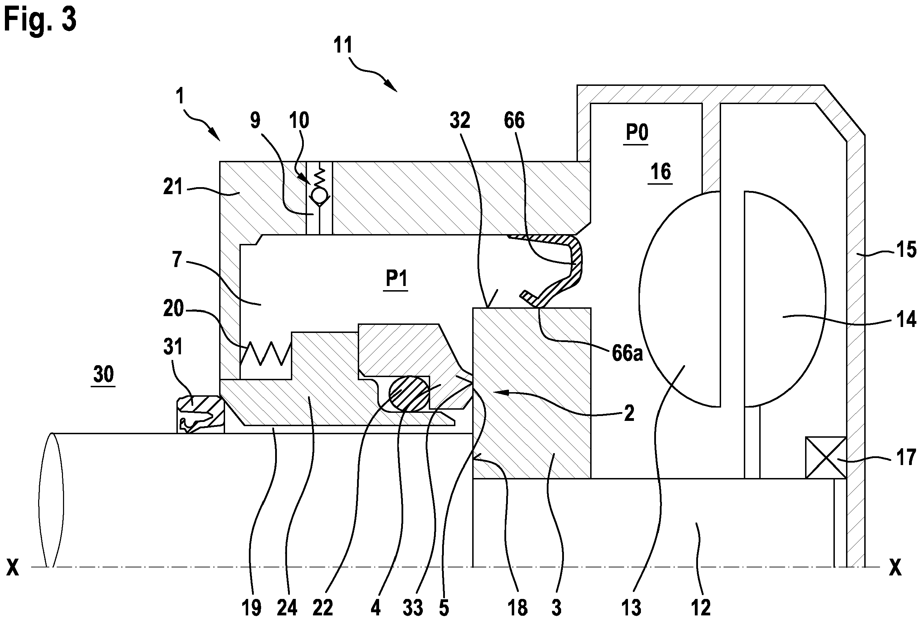

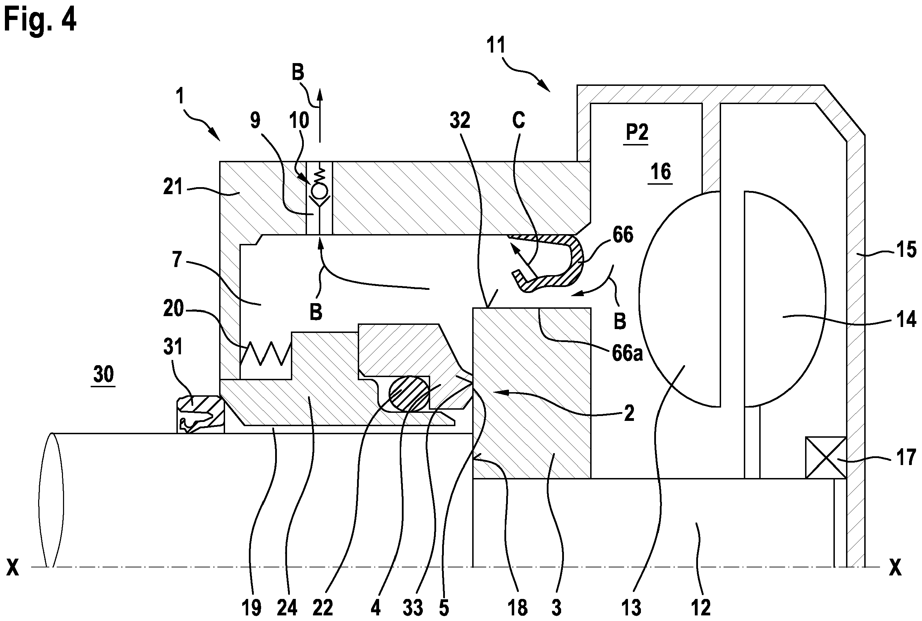

Die Fig. 3 und 4 zeigen eine Gleitringdichtungsanordnung 1 gemäß einem zweiten Ausführungsbeispiel der Erfindung, wobei gleiche bzw. funktional gleiche Teile mit den gleichen Bezugszeichen bezeichnet sind.

Beim zweiten Ausführungsbeispiel weist die Gleitringdichtungsanordnung 1 statt einer zweiten Gleitringdichtung eine Lippendichtung 66 als Zusatzdichtung auf. Die Lippendichtung 66 ist aus einem elastomeren Material hergestellt und weist eine Dichtlippe 66a auf, welche an einem radialen Außenumfang des rotierenden Gleitrings 3 der ersten Gleitringdichtung 2 abdichtet. Fig. 3 zeigt hierbei wiederum den abdichtenden Zustand der Zusatzdichtung, so dass der Kühlmediumraum 7 mit Kühlmedium gefüllt ist und abgedichtet ist, um eine Schmierung der ersten Gleitringdichtung 2 sicherzustellen. Die Lippendichtung 66 ist vorzugsweise aus einem Elastomermaterial hergestellt.

Wie weiter aus Fig. 3 ersichtlich ist, umfasst die erste Gleitringdichtung 2 eine Hülse 24, welche am stationären Gleitring 4 der ersten Gleitringdichtung 2 angeordnet ist und über welche eine Vorspannkraft des ersten Vorspannelements 20 auf den stationären Gleitring 4 übertragen wird.

Wenn nun ein Druck im Retarder-Arbeitsraum 16, ausgehend vom in Fig. 3 gezeigten Ausgangsdruck P0 (Retarder weist kein Kühlmedium bzw. Arbeitsmedium auf), durch Zufuhr von Kühlmedium auf einen Druck P2 ansteigt (Fig. 4), verformt sich die Lippendichtung 66 elastisch, so dass die Dichtlippe 66a vom radialen Außenumfang 32 des rotierenden Gleitrings 3 abhebt. Dadurch ist eine Strömung von Kühlmedium aus dem Retarder-Arbeitsraum 16 in den Kühlmediumraum 7 möglich, wie in Fig. 4 durch die Pfeile B angedeutet. Die elastische Verformung der Lippendichtung 66 ist in Fig. 4 durch den Pfeil C angedeutet. Das zweite Ausführungsbeispiel kann besonders kostengünstig bereitgestellt werden, da statt einer zweiten Gleitringdichtung eine kostengünstige Lippendichtung 66 verwendet werden kann. Die Lippendichtung 66 ist, wie in Fig. 3 und 4 gezeigt, über ein zusätzliches Bauteil mit dem Gehäuse 21 des Kühlmediumraums 7 verbunden. Somit übernimmt die Lippendichtung 66 wiederum eine Ventilfunktion und eine Abdichtfunktion, so dass im Kühlmediumraum 7 immer eine ausreichende Mange an Kühlmedium, insbesondere zum Schmieren der ersten Gleitringdichtung 2, vorhanden ist.

Die vorliegende Erfindung wurde im Zusammenhang mit einem hydrodynamischen Retarder beschrieben. Es sei jedoch angemerkt, dass die erfindungsgemäße Gleitringdichtungsanordnung 1 auch an anderen Einrichtungen mit rotierenden Wellen und Flüssigkeiten, beispielsweise Pumpen, verwendet werden kann.

### Bezugszeichenliste

- 1: Gleitringdichtungsanordnung
- 2: erste Gleitringdichtung
- 3: rotierender Gleitring
- 4: stationärer Gleitring
- 5: Dichtspalt
- 6: Zusatzdichtung
- 7: Kühlmediumraum
- 8: Kühlmediumzugang
- 9: Kühlmediumausgang
- 10: Schließelement/Rückschlagventil
- 11: Retarder
- 12: Retarder-Welle
- 13: Statorrad
- 14: Rotorrad
- 15: Retarder-Gehäuse
- 16: Retarder-Arbeitsraum
- 17: Lager
- 18: Wellenabsatz
- 19: Spalt
- 20: erstes Vorspannelement
- 21: Gehäuse der Gleitringdichtungsanordnung
- 22: O-Ring
- 23: O-Ring
- 24: Hülse
- 30: Umgebung
- 31: Umgebungsdichtung
- 32: radialer Außenumfang des rotierenden Gleitrings
- 33: erste Gleitfläche des ersten rotierenden Gleitrings 3
- 60: zweite Gleitringdichtung
- 61: stationärer Gleitring
- 61a: Steuerfläche
- 62: zweites Vorspannelement
- 63: zweite Gleitfläche des rotierenden Gleitrings
- 64: Gleitfläche des zweiten stationären Gleitrings
- 65: Dichtspalt
- 66: Lippendichtung
- 66a: Dichtlippe
- A: Axialbewegung des zweiten stationären Gleitrings 61
- B: Strömung des Kühlmediums in und aus dem Kühlmediumraum
- C: Bewegung der Dichtlippe
- P0: Druck im Retarder-Arbeitsraum ohne Retarder-Betrieb
- P1: Druck im Kühlmediumraum
- P2: Druck im Retarder-Arbeitsraum mit Retarder-Betrieb
- X-X: Axialrichtung der Gleitringdichtungsanordnung
- α: Winkel der Steuerfläche 61a

## Patentansprüche

1. Gleitringdichtungsanordnung, insbesondere Retarder-Gleitringdichtungsanordnung, umfassend
- eine erste Gleitringdichtung (2) mit einem ersten rotierenden Gleitring (3) und einem ersten stationären Gleitring (4), welche zwischen sich einen ersten Dichtspalt (5) definieren,
- eine Zusatzdichtung (6),
- einen Kühlmediumraum (7), welcher mit einem Kühlmedium gefüllt ist und welcher an den Dichtspalt der ersten Gleitringdichtung (2) reicht,
- wobei die erste Gleitringdichtung (2) den Kühlmediumraum gegenüber einer Umgebung abdichtet,
- einen Kühlmediumzugang (8) in den Kühlmediumraum (7) zum Zuführen von Kühlmedien, und
- einen Kühlmediumausgang (9) aus dem Kühlmediumraum (7) zum Abführen von Kühlmedium,
- **dadurch gekennzeichnet, dass** die Zusatzdichtung (6) im Kühlmediumzugang (8) angeordnet ist,
- wobei die Zusatzdichtung (6) eingerichtet ist, bei einem Druckanstieg im Kühlmediumzugang (8) über einen ersten Druck (P1) im Kühlmediumraum (7) zu öffnen und beim zweiten Druck (P0) im Kühlmediumzugang (8), welcher kleiner ist als der erste Druck (P1) im Kühlmediumraum zu schließen.

2. Gleitringdichtungsanordnung nach Anspruch 1, wobei im Kühlmediumausgang (9) ein Schließelement (10) zum Freigeben und Verschließen des Kühlmediumausgangs (9) angeordnet ist.

3. Gleitringdichtungsanordnung nach Anspruch 2, wobei das Schließelement (10) ein Rückschlagventil ist.

4. Gleitringdichtungsanordnung nach einem der vorhergehenden Ansprüche, wobei die Zusatzdichtung (6) eine Lippendichtung (66) ist.

5. Gleitringdichtungsanordnung nach Anspruch 4, wobei die Lippendichtung (66) eine Dichtlippe (66a) aufweist, und wobei die Lippendichtung mit der Dichtlippe an einem äußeren Umfangsbereich (32) des rotierenden Gleitrings (3) abdichtet.

6. Gleitringdichtungsanordnung nach einem der Ansprüche 1 bis 3, wobei die Zusatzdichtung (6) eine zweite Gleitringdichtung (60) ist, welche einen axial verschiebbaren Gleitring aufweist.

7. Gleitringdichtungsanordnung nach Anspruch 6, wobei der axial verschiebbare Gleitring ein zweiter stationärer Gleitring (61) der zweiten Gleitringdichtung (60) ist.

8. Gleitringdichtungsanordnung nach Anspruch 7, wobei der erste rotierende Gleitring (3) der ersten Gleitringdichtung (2) und der zweite rotierende Gleitring der zweiten Gleitringdichtung (60) in einem einzigen gemeinsamen Bauteil mit einer ersten Gleitfläche (33) und einer zweiten Gleitfläche (63) integriert sind.

9. Gleitringdichtungsanordnung nach Anspruch 8, wobei die erste Gleitfläche (33) und die zweite Gleitfläche (63) an der gleichen Seite des gemeinsamen Bauteils angeordnet sind.

10. Gleitringdichtungsanordnung nach einem der Ansprüche 6 bis 9, wobei der axial verschiebbare Gleitring eine zum Kühlmediumzugang (8) und in Axialrichtung (X-X) gerichtete Steuerfläche (61a) aufweist, derart, dass bei einem höheren Druck im Kühlmediumzugang (8) als einem ersten Druck (P1) im Kühlmediumraum (7) der axial verschiebbare Gleitring eine Axialbewegung (A) ausführt.

11. Gleitringdichtungsanordnung nach einem der vorhergehenden Ansprüche, wobei der Kühlmediumraum (7) in einem im Schnitt C-förmigen Gehäuse (21) angeordnet ist.

12. Hydrodynamischer Retarder, umfassend eine Retarder-Welle (12), ein Statorrad (13), ein Rotorrad (14), ein Retarder-Gehäuse (15) und eine Gleitringdichtungsanordnung gemäß einem der vorhergehenden Ansprüche.

13. Hydrodynamischer Retarder nach Anspruch 12, wobei die Gleitringdichtungsanordnung direkt an der Retarder-Welle (12) abdichtet.

14. Hydrodynamischer Retarder nach Anspruch 12 oder 13, ferner umfassend eine Umgebungsdichtung (31), insbesondere eine elastomere Umgebungsdichtung, welche zwischen der Gleitringdichtungsanordnung (1) und der Retarder-Welle (12) abdichtet.

## Claims

1. Mechanical seal arrangement, in particular retarder-mechanical seal arrangement, comprising
- a first mechanical seal (2) with a first rotating slide ring (3) and a first stationary slide ring (4) which define a first sealing gap (5) in between them,
- an additional seal (6),
- a cooling medium space (7) filled with a cooling medium and extending to the sealing gap of the first mechanical seal (2),
- wherein the first mechanical seal (2) seals the cooling medium space against an environment,
- a cooling medium access (8) into the cooling medium space (7) for supplying cooling media, and
- a cooling medium exit (9) from the cooling medium space (7) for draining a cooling medium,
**characterized in that**
- the additional seal (6) is arranged inside the cooling medium access (8),
- wherein the additional seal (6) is configured to open when a pressure inside the cooling medium access (8) increases above a first pressure (P1) inside the cooling medium space (7), and to close at a second pressure (P0) inside the cooling medium access (8), which is lower than the first pressure (P1) inside the cooling medium space.

2. Mechanical seal arrangement according to claim 1, wherein a closing element (10) for opening and closing the cooling medium exit (9) is arranged in the cooling medium exit (9).

3. Mechanical seal arrangement according to claim 2, wherein the closing element (10) is a check valve.

4. Mechanical seal arrangement according to any of the preceding claims, wherein the additional seal (6) is a lip seal (66).

5. Mechanical seal arrangement according to claim 4, wherein the lip seal (66) has a sealing lip (66a), and wherein the lip seal seals with the sealing lip at an outer circumferential area (32) of the rotating slide ring (3).

6. Mechanical seal arrangement according to any of the claims 1 to 3, wherein the additional seal (6) is a second mechanical seal (60) that has an axially displaceable slide ring.

7. Mechanical seal arrangement according to claim 6, wherein the axially displaceable slide ring is a second stationary slide ring (61) of the second mechanical seal (60).

8. Mechanical seal arrangement according to claim 7, wherein the first rotating slide ring (3) of the first mechanical seal (2) and the second rotating slide ring of the second mechanical seal (60) are integrated in a single common structural component with a first sliding surface (33) and a second sliding surface (63).

9. Mechanical seal arrangement according to claim 8, wherein the first sliding surface (33) and the second sliding surface (63) are arranged at the same side of the common structural component.

10. Mechanical seal arrangement according to any of the claims 6 to 9, wherein the axially displaceable slide ring has a control surface (61a) that is oriented towards the cooling medium access (8) and in the axial direction (X-X), namely in such a manner that the axially displaceable slide ring performs an axial movement (A) in the event that a pressure inside the cooling medium access (8) is higher than a first pressure (P1) inside the cooling medium space (7).

11. Mechanical seal arrangement according to any of the preceding claims, wherein the cooling medium space (7) is arranged inside a housing (21) having a C-shaped cross section.

12. Hydrodynamic retarder, comprising a retarder shaft (12), a stator wheel (13), a rotor wheel (14), a retarder housing (15), and a mechanical seal arrangement according to any of the preceding claims.

13. Hydrodynamic retarder according to claim 12, wherein the mechanical seal arrangement seals directly at the retarder shaft (12).

14. Hydrodynamic retarder according to claim 12 or 13, further comprising an environmental seal (31), in particular an elastomeric environmental seal that seals between the mechanical seal arrangement (1) and the retarder shaft (12).

## Revendications

1. Ensemble de bague d'étanchéité glissante, en particulier ensemble de bague d'étanchéité glissante de retardateur, comprenant
- une première bague d'étanchéité glissante (2) avec une première bague glissante rotative (3) et une première bague glissante fixe (4), lesquelles définissent entre elles une première fente d'étanchéité (5),
- un joint d'étanchéité supplémentaire (6),
- un espace de milieu de refroidissement (7), lequel est rempli d'un milieu de refroidissement et lequel atteint la fente d'étanchéité de la première bague d'étanchéité glissante (2),
- dans lequel la première bague d'étanchéité glissante (2) étanchéifie l'espace de milieu de refroidissement par rapport à un environnement,
- un accès de milieu de refroidissement (8) dans l'espace de milieu de refroidissement (7) pour l'amenée de milieux de refroidissement, et
- une sortie de milieu de refroidissement (9) de l'espace de milieu de refroidissement (7) pour l'évacuation de milieu de refroidissement,
- **caractérisé en ce que**
le joint d'étanchéité supplémentaire (6) est agencé dans l'accès de milieu de refroidissement (8),
- dans lequel le joint d'étanchéité supplémentaire (6) est aménagé pour s'ouvrir, en cas de hausse de pression dans l'accès de milieu de refroidissement (8) au-delà d'une première pression (P1) dans l'espace de milieu de refroidissement (7) et pour se fermer à une deuxième pression (P0) dans l'accès de milieu de refroidissement (8), laquelle est inférieure à la première pression (P1) dans l'espace de milieu de refroidissement.

2. Ensemble de bague d'étanchéité glissante selon la revendication 1, dans lequel un élément de fermeture (10) est agencé dans la sortie de milieu de refroidissement (9) pour la libération et la fermeture de la sortie de milieu de refroidissement (9).

3. Ensemble de bague d'étanchéité glissante selon la revendication 2, dans lequel l'élément de fermeture (10) est un clapet antiretour.

4. Ensemble de bague d'étanchéité glissante selon l'une quelconque des revendications précédentes, dans lequel le joint d'étanchéité supplémentaire (6) est un joint d'étanchéité à lèvre (66).

5. Ensemble de bague d'étanchéité glissante selon la revendication 4, dans lequel le joint d'étanchéité à lèvre (66) présente une lèvre d'étanchéité (66a), et dans lequel le joint d'étanchéité à lèvre étanchéifie avec la lèvre d'étanchéité au niveau d'une zone circonférentielle extérieure (32) de la bague glissante rotative (3).

6. Ensemble de bague d'étanchéité glissante selon l'une quelconque des revendications 1 à 3, dans lequel le joint d'étanchéité supplémentaire (6) est une deuxième bague d'étanchéité glissante (60), laquelle présente une bague glissante axialement mobile.

7. Ensemble de bague d'étanchéité glissante selon la revendication 6, dans lequel la bague glissante axialement mobile est une deuxième bague glissante fixe (61) de la deuxième bague d'étanchéité glissante (60).

8. Ensemble de bague d'étanchéité glissante selon la revendication 7, dans lequel la première bague glissante rotative (3) de la première bague d'étanchéité glissante (2) et la deuxième bague glissante rotative de la deuxième bague d'étanchéité glissante (60) sont intégrées dans un seul composant commun avec une première surface glissante (33) et une deuxième surface glissante (63).

9. Ensemble de bague d'étanchéité glissante selon la revendication 8, dans lequel la première surface glissante (33) et la deuxième surface glissante (63) sont agencées du même côté du composant commun.

10. Ensemble de bague d'étanchéité glissante selon l'une quelconque des revendications 6 à 9, dans lequel la bague glissante axialement mobile présente une surface de commande (61a) dirigée vers l'accès de milieu de refroidissement (8) et dans la direction axiale (X-X), de sorte qu'en cas de pression plus élevée dans l'accès de milieu de refroidissement (8) qu'une première pression (P1) dans l'espace de milieu de refroidissement (7), la bague glissante axialement mobile effectue un mouvement axial (A).

11. Ensemble de bague d'étanchéité glissante selon l'une quelconque des revendications précédentes, dans lequel l'espace de milieu de refroidissement (7) est agencé dans un boîtier en forme de C en coupe (21).

12. Retardateur hydrodynamique, comprenant un arbre de retardateur (12), une roue de stator (13), une roue de rotor (14), un boîtier de retardateur (15) et un ensemble de bague d'étanchéité glissante selon l'une quelconque des revendications précédentes.

13. Retardateur hydrodynamique selon la revendication 12, dans lequel l'ensemble de bague d'étanchéité glissante étanchéifie directement l'arbre de retardateur (12).

14. Retardateur hydrodynamique selon la revendication 12 ou 13, comprenant en outre un joint d'étanchéité d'environnement (31), en particulier un joint d'étanchéité d'environnement élastomère, lequel étanchéifie entre l'ensemble de bague d'étanchéité glissante (1) et l'arbre de retardateur (12).
